# EUROPEAN PATENT SPECIFICATION

(11) **EP 0 543 094 B1**
(45) Date of publication and mention of the grant of the patent: **25.06.1997**
(21) Application number: 92114854.0
(22) Date of filing: 31.08.1992
(51) Int. Cl.: G02B 6/38

(54) **Integrally-molded ceramic alignment sleeve for optical fiber connector and method of producing the same**
Einstückig gegossene Ausrichthülse für faseroptischen Stecker und ihr Herstellungsverfahren
Manchon d'alignement céramique moulé pour connecteur à fibre optique et procédé de fabrication

(30) Priority: 20.11.1991 JP 304529/91
(43) Date of publication of application: 26.05.1993
(73) Proprietor: KYOCERA CORPORATION, Kyoto-shi, Kyoto-fu (JP); SANWA DENKI KOGYO CO., LTD., Tokyo (JP)
(72) Inventor: Sonoda, Hideto, c/o Kyocera Corp., Kitami-shi, Hokkaido (JP); Matsumoto, Toshiyuki, c/o Kyocera Corp., Kitami-shi, Hokkaido (JP); Kawahara, Akira, c/o Sanwa Denki Kogyo Co., Ltd., Tokyo (JP)
(74) Representative: Barz, Peter, Dr.

(56) References cited:
- EP-A- 0 080 722
- EP-A- 0 433 177
- DE-A- 2 931 018
- DE-A- 3 704 790
- PATENT ABSTRACTS OF JAPAN vol. 13, no. 215 (P-874)19 May 1989 & JP-A-10 32 210

## Description

The present invention relates to an integrally-molded ceramic alignment sleeve for use in an optical fiber connector for connecting optical fibers, which is used in optical communication systems and optical fiber sensors, and more particularly to an integrally-molded ceramic alignment sleeve with a high strength into which a ferrule can be precisely fitted with a good insertion feel. This invention also relates to a method of producing the above-mentioned integrally-molded ceramic alignment sleeve at low cost.

Conventionally, an optical fiber connector employing a zirconia ferrule is widely used in the field of optical communications. An integrally-molded split phosphor bronze or zirconia alignment sleeve is used as an adaptor for the above optical fiber connector. Particular attention is being paid to the split zirconia alignment sleeve because no metal powder is created during attachment or detachment of the ferrule, and excellent optical connection performance can be attained.

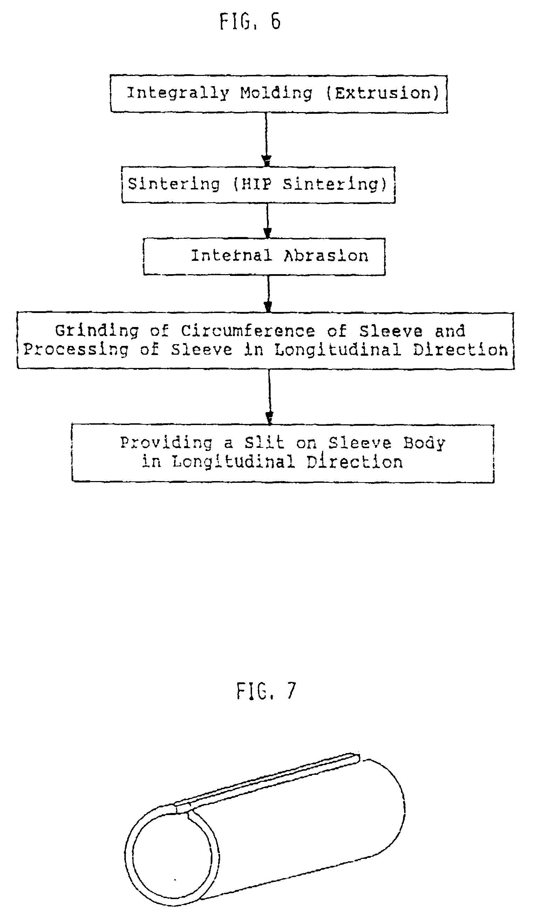

A conventional ceramic split alignment sleeve is in a cylindrical form as shown in Fig. 7, provided with a slit extending in the longitudinal direction of the sleeve. The inner surface of the sleeve is subjected to precision abrasion using diamond grain in such a way that the inner diameter of the sleeve is slightly smaller than the outer diameter of a ferrule to be inserted therein.

In the manufacture of the ceramic split alignment sleeve as shown in Fig. 7, however, the flowability of the diamond grain is poor because there is no relief on the inner surface of the sleeve. Furthermore, the area to be subjected to abrasion finishing is large, therefore the processability is poor and considerable time is expended in abrasion finishing. The problem also exists that the straightness of the split alignment sleeve in the longitudinal direction is not satisfactory because the flowability of the diamond grain is poor. Moreover, the variation of the necessary force to remove the ferrule from the thus prepared split sleeve after insertion is large. Therefore, when a split alignment sleeve with a good insertion feel is required, this variation causes the yield of finished products to worsen.

According to the technology disclosed in Japanese Laid-Open Patent Application 64-32210, by the provision of a convex portion with an arc-shaped cross-section extending in the longitudinal direction at three locations in the circumferential direction on the inner surface of a split alignment sleeve with a longitudinal slit, it is possible to steadily fit the ferrule into the split sleeve under pressure and secure the ferrule with stable pressure so that the force required to attach the ferrule to the sleeve or detach it therefrom can be considerably reduced. This kind of sleeve with convex portions is integrally molded from a metal or plastic. Alternatively, the sleeve body is formed from a plastic and then the convex portions are provided in the sleeve body by insert-molding of metal, ceramic or glass rods. In other words, the sleeve body itself and the convex portions with an arc-shaped cross-section are separate bodies.

In the above-mentioned Japanese Laid-Open Patent Application, there is no description that the sleeve body and the convex portions with the arc-shaped cross-section are integrally molded using a ceramic material. It is natural to assume that the internal processing of an integrally-molded ceramic product of a shape such as this is extremely difficult.

Also, since the convex portion is formed with an arc-shaped cross-section, the ferrule comes into line contact with the convex portion, so that the optical connection performance is ultimately governed by the roundness of the ferrule.

In addition, even with an integrally-molded ceramic alignment sleeve provided with convex portions, for instance, when the ferrule is inserted into the sleeve, stress concentration is produced at the section where each convex portion is connected to the internal surface of the sleeve body, and the mechanical strength of this type of sleeve becomes a problem.

Furthermore, when the sleeve body and the convex portions are separate members as disclosed in Japanese Laid-Open Patent Application 64-32210, a large number of manufacturing steps are required resulting in increased costs.

Accordingly, a first object of the present invention is to provide an integrally-molded ceramic cylindrical alignment sleeve with a high mechanical strength for use in an optical fiber connector, into which a ferrule can be snugly fitted with a good insertion feel.

A second object of the present invention is to provide a method of producing the above-mentioned integrally-molded ceramic alignment sleeve at low cost with a good yield.

The first object of the present invention can be achieved by an integrally-molded ceramic cylindrical alignment sleeve as defined in claim 1.

These integrally-molded ceramic cylindrical alignment sleeves may include a slit which extends in the longitudinal direction thereof.

The second object of the present invention can be achieved by a method of producing an integrally-molded ceramic cylindrical alignment sleeve as defined in claim 5.

When this integrally-molded ceramic cylindrical alignment sleeve includes a slit which extends in the longitudinal direction thereof, a step of forming the slit is also Included in the above method.

A more complete appreciation of the present invention and many of the attendant advantages thereof will be readily obtained as the same becomes better understood by reference to the following detailed description when considered in connection with the accompanying drawings, wherein:
Fig. 1 is a longitudinal sectional view of an embodiment of an integrally-molded ceramic alignment sleeve with a slit according to the present invention;
Fig. 2(A) through Fig. 2(F) show the end side portions of examples of the integrally-molded ceramic alignment sleeve with a slit according to the present invention;
Fig. 3 is a cross-sectional view showing one embodiment of an integrally-molded ceramic alignment sleeve with a slit according to the present invention;
Fig. 4(A) and Fig. 4(B) are partially enlarged views of the section A in Fig. 1 with different radius values of a section where the convex portion connects to the inner surface of the sleeve body of the alignment sleeve;
Fig. 5(A) is a schematic illustration for explaining breaking load tests conducted on the split alignment sleeve shown in Fig. 3;
Fig. 5(B) is a graph showing the relationship between the breaking load and the radius value of the section where the convex portion connects to the inner surface of the alignment sleeve;
Fig. 6 is a flow diagram showing the manufacturing process of the integrally-molded ceramic alignment sleeve according to the present invention;
Fig. 7 is a perspective view of a conventional split ceramic alignment sleeve;
Fig. 8 is a partial longitudinal sectional view of a single core optical connector comprising a connection adaptor including an alignment sleeve according to the present invention, and a pair of connection plugs, which are not connected yet;
Fig. 9 is a partial longitudinal sectional view of the single core optical connector shown in Fig. 8, in which the connection adaptor including the alignment sleeve according to the present invention, and a pair of connection plugs are connected;
Fig. 10 is a partial longitudinal sectional view of a two-core optical connector before connection, in which an alignment sleeve according to the present invention is employed; and
Fig. 11 is a partial longitudinal sectional view of a four-core optical connector before connection, in which an alignment sleeve according to the present invention is employed.

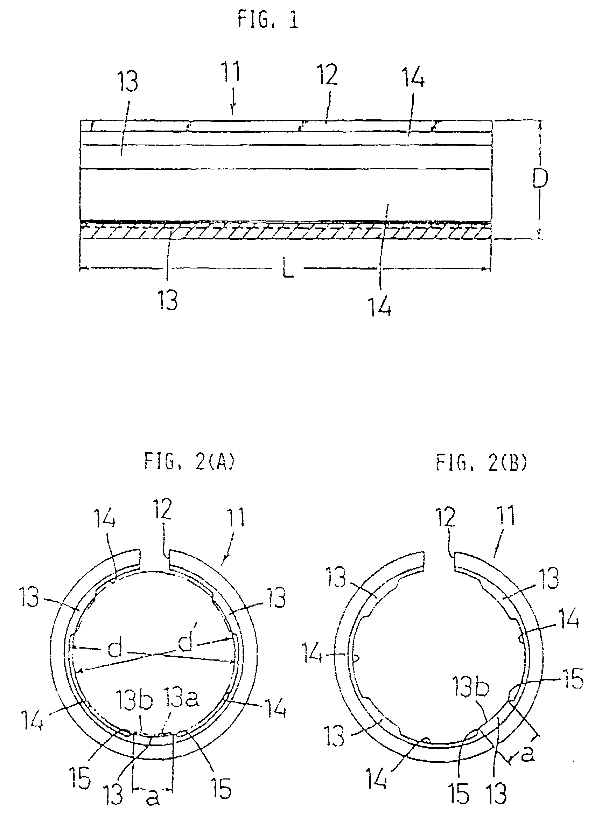

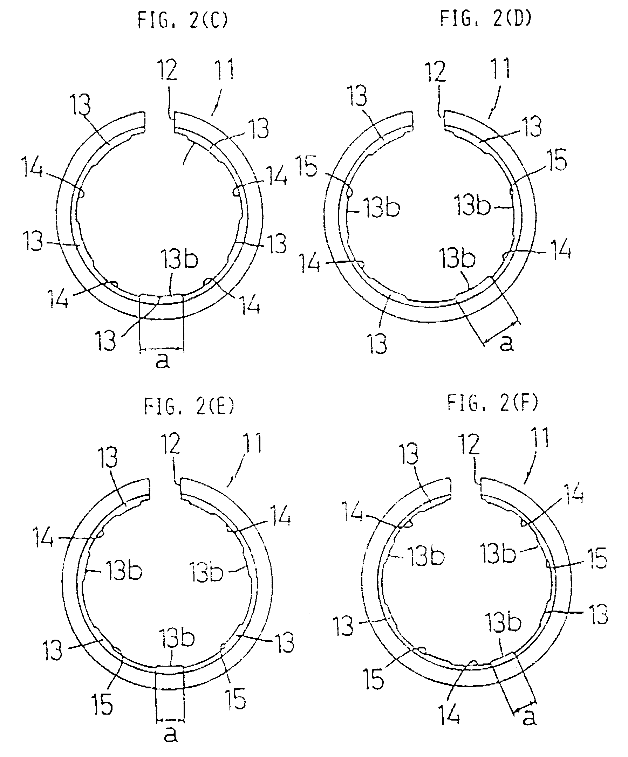

Fig. 1 is a longitudinal sectional view of an embodiment of an integrally-molded ceramic alignment sleeve with a silt according to the present invention. Fig. 2(A) through Fig. 2(F) show the end side portions of examples of the integrally-molded ceramic alignment sleeve 11 with a slit 12 according to the present invention. In these examples of the ceramic alignment sleeve, a sleeve body 11 is formed by subjecting zirconia ceramic to extrusion molding or injection molding so as to have a slit 12 extending in the longitudinal direction thereof in the form of a cylinder. The thus molded sleeve body 11 is provided with a spring-like resilience directed toward the center of the cylindrical sleeve body 11 in the direction of the radius thereof.

The sleeve body 11 is further provided with convex portions 13 and concave portions 14 at the inside surface of the sleeve body 11, which are located alternately along the circumference thereof and extend in the longitudinal direction of the sleeve body 11. The convex portions 13 function as holding means for holding an optical connector ferrule (not shown), while the concave portions 14 serve as portions in which abrasion dust or the like which is formed by the friction between the sleeve body 11 and the optical connector ferrule. Therefore a particular surface smoothness precision is not required for the concave portions 14.

A plurality of such convex portions 13 and concave portions 14 is provided on the inner surface of the sleeve body 11 along the circumference thereof with predetermined intervals. More specifically the number of the convex portions 13 or the concave portions 14 is preferably 3 to 8 as shown in Figs. 2(A) to 2(F). Thus, the external surface of the optical connector ferrule (not shown) is tightly clamped uniformly in 3 to 8 directions.

Each convex portion 13 includes at the inner surface thereof a marginal portion 13a to be abraded as shown by the alternate long and two short dashes line. The top surface 13b of each convex portion 13, which is formed by abrading the marginal portion 13a, is in the shape of a reverse arc. The inner diameter of the reverse arc of the top surface 13b is set several microns smaller than the outer diameter of the optical connector ferrule (not shown), so that the external surface of the optical connector ferrule is tightly clamped and held by partial contact with the arc top surfaces 13b of the convex portions 13.

To be more specific, for example, when the length (L) of the sleeve body 11 is 11.4 mm, the outer diameter (D) of the sleeve body 11 is 3.2 ± 0.02 mm, and the inner diameter (d) of the sleeve body 11 is 2.8 mm, it is appropriate that the inner diameter (d') of the imaginary round formed by the arc top surfaces 13b is 2.493 mm. Thus, one half of the difference between the inner diameter (d) and the inner diameter (d') is the height of each convex portion 13.

Furthermore, the width (a) of each convex portion 13 differs depending upon the number of the convex portions 13. However, when the number of the convex portions 13 is, for instance, 3 to 5 as shown in Figs. 2(A) to 2(C), it is appropriate that the width (a) is 0.7 mm. When the number of the convex portions 13 is 6 as shown in Fig. 2(D), it is appropriate that the width (a) is 0.6 mm. When the number of the convex portions 13 is 7 or 8 as shown in Fig. 2(E) and Fig. 2(F), it is appropriate that the width (a) is about 0.4 mm.

A step portion with a difference in level between the convex portion 13 and the concave portion 14 is formed in a smoothly curved shape along the circumference of the sleeve body 11. When the step portion is formed in such a smoothly curved shape, the breaking strength of the convex portion 13 significantly increases as compared with the case where the step portion is formed in a right-angle shape.

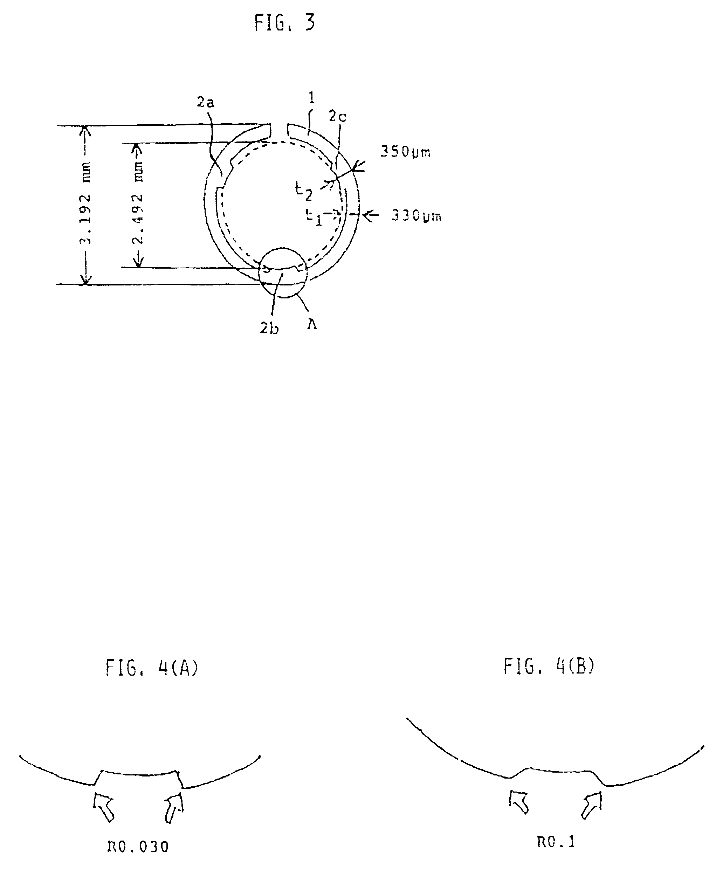

Fig. 3 is a cross-sectional view showing another embodiment of an integrally-molded ceramic alignment sleeve with a slit according to the present invention. On the inner surface of a cylindrical sleeve body 1, convex portions 2a, 2b and 2c extending longitudinally from one end to the other of the sleeve body 1 are provided, with the convex portions 2a, 2b and 2c uniformly spaced in the circumferential direction of the sleeve body 1 with an adequate interval. The upper surfaces of the convex portions 2a, 2b and 2c are abraded to form a reversed arc shape (an arc shape centered around the cylindrical axis of the sleeve body 1) and the section where each convex portion connects to the inner surface of the sleeve body 1 is gently radiused to form a continuous R. The upper surfaces of the convex portions 2a, 2b and 2c are in the shape of an arc with a radius of curvature smaller than the radius of curvature of the ferrule to be inserted in the sleeve, so that the ferrule can be fitted into the sleeve without producing looseness.

To obtain a proper radius value of the section where the convex portion connects to the inner surface of the sleeve body, the breaking load tests were carried out, with the radius value of the convex portion shown in Fig. 3 being changed to 0.030 mm, 0.1 mm and 0.5 mm. In the breaking load tests, the number of test samples with the radius of 0.030 mm was 53 and the number of test samples with the radius of 0.1 mm, and the number of test samples with the radius of 0.5 mm were respectively 30.

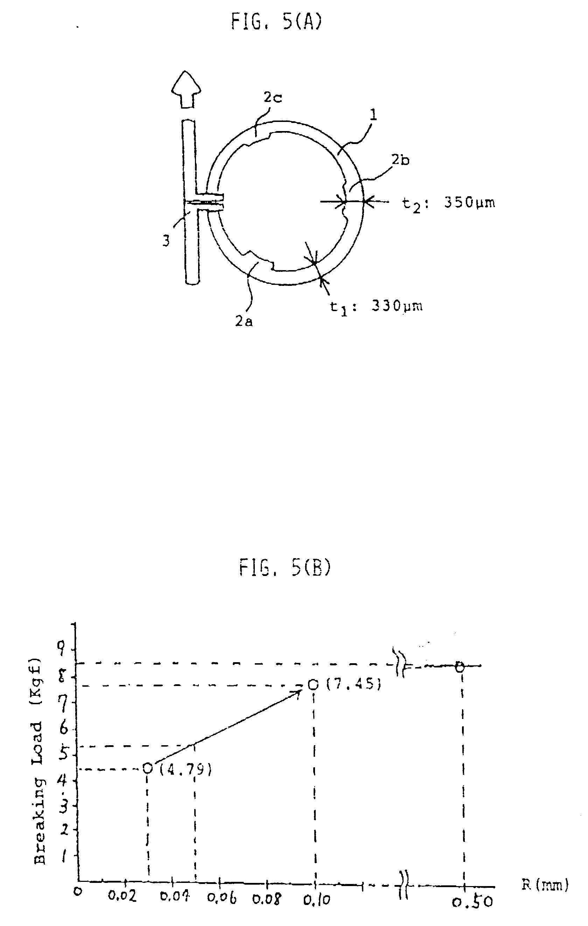

Fig. 4(A) and Fig. 4(B) are enlarged views of the section A in Fig. 1, with a radius R = 0.030 mm in Fig. 4(A), and a radius R = 0.1 mm in Fig. 4(B). In the breaking load tests, a movable part 3 of a measuring instrument is inserted into the slit of a split alignment sleeve as shown in Fig. 5(A). One end of the movable part 3 is secured and a load is applied to the other end in the direction of the arrow to cause the split alignment sleeve to open. The conditions of this breaking load test were as follows:
Wall thickness t₁ of sleeve body: 330 µm
Total wall thickness t₂: 350 µm
Opening speed: 5 mm/min.
Temperature: 25°C
Humidity: 59%

The test results are given in the following Table 1.

**Table 1**

| | Average Breaking Load | Weibull's Coefficient |
|---|---|---|
| R=0.030 | 4.79 kgf | 10.372 |
| R=0.10 | 7.45 kgf | 13.60 |
| R=0.50 | 8.46 kgf | 13.2 |

Fig. 5(B) is a graph showing the results of the above-mentioned breaking load tests, with R (radius) as the X-axis and the breaking load in kgf as the Y-axis.

It is clear that the ferrule to be inserted into this sleeve is supported at the three convex portions and stress concentration is applied to each connecting section where the convex portion connects to the inner surface of the sleeve body. In particular, the stress concentration applied to the connecting section of the convex portion 2b, located on the opposite side to the slit of the sleeve body, should be larger as compared with any case where the number of convex portions is four or more. Accordingly, the minimum radius value can be determined for the gentle radius condition by reading from the graph of Fig. 5(B) the radius value corresponding to the minimum breaking load applied to the split alignment sleeve for practical use. Since a practical breaking load required on the split alignment sleeve in which a ferrule is supported at three points is considered to be about 5 kgf or more, the slit alignment sleeve can stand the above-mentioned breaking load when the radius value is about 0.05 mm or more as can be seen from the graph in Fig. 5(B).

More specifically, in view of Fig. 5(B), the requirement for an average breaking load of about 5 kgf can be satisfied even when R is about 0.04 mm. However, in view of the dispersion of the accuracy of the products, and the yield of the products, it is preferable that the radius value (R) be about 0.05 mm or more.

Because the integrally-molded ceramic cylindrical alignment sleeve of the present invention as described above has a simple shape, it is easy to mold. The internal processing after sintering also may be accomplished by merely subjecting the upper surfaces of the convex portions to abrasion finishing. Therefore, the processing time is curtailed to a large extent in comparison with the manufacturing process of a conventional alignment sleeve. In addition, there are adequate intervals between the adjoining convex portions 2a, 2b, 2c respectively, so that the flowability of the diamond grain used in the internal processing is therefore extremely good. This results in great improvement in the longitudinal straightness of the convex portions. In other words, an adequate interval between the adjoining convex portions may be determined so as to clearly obtain the improvement in straightness of the convex portion.

Moreover, because the straightness of the convex portions of the alignment sleeve according to the present invention is extremely good, the necessary force to remove a ferrule from the sleeve is constantly stable. In the case where a good insertion feel of the ferrule into the sleeve is required, production of the sleeves is generally controlled by the above-mentioned necessary force to remove the ferrule from the sleeve. Therefore, according to the present invention, the yield can be greatly improved. For example, in the case of the conventional zirconia alignment sleeve, the necessary force to remove a ferrule from the sleeve ranges from 120 to 420 gf when the inner diameter of the sleeve is within the range from 2.491 mm to 2.496 mm. As opposed to this variation of 300 gf, the necessary force to remove the ferrule from the integrally-molded ceramic cylindrical alignment sleeve according to the present invention ranges from 100 to 260 gf, with a variation of 160 gf. Understandably, therefore, the variation in the necessary force to remove a ferrule from the alignment sleeve of the present invention can be drastically stabilized.

The integrally-molded ceramic alignment sleeve with three convex portions is described in the above embodiment, but this is in no way restrictive of the present invention. Four or more convex portions may be provided on the inner surface of the sleeve body. In this case, with the improved effect of the flowability of diamond grain in the course of internal processing taken into consideration, it is necessary that the adjoining convex portions be spaced at adequate intervals. Also, to shorten the abrasion processing time for the upper surfaces of the convex portions, it is better to reduce the area to be subjected to abrasion processing. Therefore, in the case where the number of convex portions is increased, it is desirable that the size of each convex portion be made as small as possible.

The method of producing the above-mentioned integrally-molded ceramic cylindrical alignment sleeve for use in the optical connector according to the present invention will now be explained in detail with reference to the flow diagram shown in Fig. 6.

As shown in Fig. 6, in a molding process, using a metal mold, a ceramic raw material is formed by extrusion into an elongated cylindrical sleeve body with such an inner surface structure as outlined above. Specifically, at least three convex portions running from one end to the other in the longitudinal direction of the cylindrical alignment sleeve are located on the inner surface of the sleeve body, uniformly spacing on the circumferential direction of the sleeve with adequate intervals. The upper surfaces of the convex portions are in the form of reverse arc (arc shape centered around the cylindrical axis of the sleeve body), and, in addition, the sleeve body and the convex portions are integrally molded in such a way that the section where each convex portion connects to the inner surface of the sleeve body is radiused to form a continuous R.

After the completion of molding, the molded product is sintered. Even with normal sintering, the ceramic alignment sleeve according to the present invention has a high breaking strength and the variation of the breaking strength and that of the necessary force to remove the ferrule from the sleeve are small because the ceramic sleeve body and the convex portions are integrally molded according to the present invention. By using HIP (hot-isostatic-press) sintering, the breaking strength of the sleeve of this shape can be increased, and the variation of the breaking strength and that in the necessary force to remove the ferrule from the sleeve can be made even smaller.

Subsequently, the upper surfaces of the convex portions provided on the inner surface of the sleeve body are subjected to abrasion finishing.

The thus obtained long sleeve body is subjected to grinding in the circumferential direction and in the longitudinal direction and then cut into a plurality of sleeve bodies with a predetermined length for use in the ceramic cylindrical alignment sleeve of the present invention. The edges of each of the thus cut sleeve bodies are then subjected to abrasion finishing, whereby sleeve bodies for use in the present invention are prepared.

When the ceramic alignment sleeve of the present invention has a slit in the longitudinal direction, a slit is provided after the grinding process. Thus, the integrally-molded ceramic cylindrical alignment sleeve according to the present invention can be obtained.

As previously mentioned, the breaking strength of the sleeve can be further improved when the HIP sintering is employed in the sintering process. To confirm the above fact, the breaking strength test was conducted using 50 samples of the integrally-molded ceramic split alignment sleeve subjected to HIP sintering, with the radius value of the section where the convex portion connects to the inner surface of the sleeve being 0.10 mm. As a result, the breaking load was 7.66 kgf on average and the Weibull's coefficient was observed to be markedly improved at 15.81. The variation in the breaking strength can be drastically reduced.

As stated above, according to the present invention, the cylindrical sleeve body and the convex portions are integrally molded from a ceramic material. Then, the integrally molded sleeve is sintered, followed by abrasion finishing of the upper surfaces of the convex portions. This fabrication can be carried out in an extremely short time although the number of manufacturing processes is the same as for the conventional process.

In addition, by integrally molding the sleeve body and the convex portions from a ceramic raw material and then sintering the molded sleeve, the breaking strength of the sleeve can be increased and the variations in the breaking strength and the necessary force to remove the ferrule from the sleeve can be decreased. Furthermore, by applying the HIP sintering, it is possible to further improve the breaking strength of the sleeve and to obtain very small variations of the breaking strength and the necessary force to remove the ferrule from the sleeve.

Accordingly, an integrally-molded ceramic alignment sleeve with high quality can be produced at an extremely low cost by the producing method of the present invention.

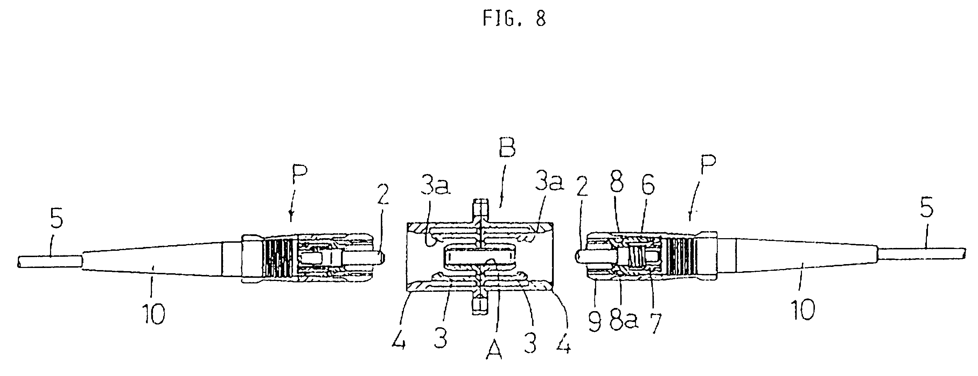

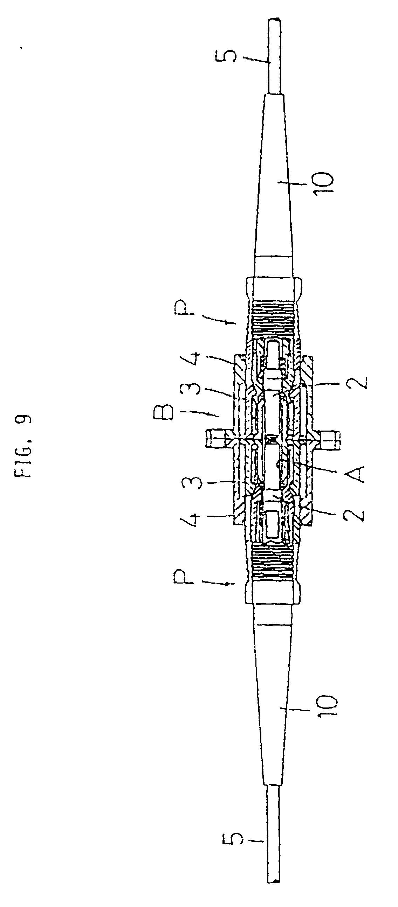

The integrally-molded ceramic alignment sleeve according to the present invention can be employed in a single core connector as shown in Fig. 8 and Fig. 9. In these figures, reference A indicates the integrally-molded ceramic alignment sleeve according to the present invention. Specifically, the ceramic alignment sleeve is a split sleeve.

The single core connector shown in Fig. 8 and Fig. 9 comprises a pair of connection plugs, P, P, each having a built-in ferrule with an optical fiber inserted therein, and a connection adapter B with the inner split sleeve A held therein for connecting each ferrule inserted therein from the opposite sides thereof, and setting the ferrules in alignment.

The connection adapter B including the above-mentioned inserted split alignment sleeve A comprises, as shown in Figs. 8 and 9, a pair of sleeves 3, 3 for holding the split alignment sleeve A, a pair of housings 4, 4 for holding the pair of the sleeves 3, 3 and the split alignment sleeve A, and screws (not shown) connecting the pair of housings 4, 4. At the tip of each sleeve 3, 3, there are provided engagement projections 3a, 3a which engage the engagement groove portions of a frame of the connection plugs P, P.

Each connection plug P comprises a ferrule 2 with an inner built-in capillary (not shown) through which an optical fiber code 5 is inserted, a coil spring 6 which is externally attached to the rear end of the ferrule 2 so as to elastically push the ferrule 2 in the forward direction, a stepped, cylindrical stop ring 7 which is inscribed in the rear end of the coil spring 6, a plug frame 8 which is fitted into the stop spring 7 and regulates the movement of the ferrule 2, a knob 9 which is externally fitted on the plug frame 8, a caulking ring (not shown) for fixing by caulking the optical fiber code 5 to the rear end of the stop ring 7, and a rubber holder 10 for capping the caulking ring 10.

In order to connect the optical fibers of the optical fiber codes 5, 5 by use of a pair of the thus fabricated connection plugs P, P, and the connection adapter B, the connection plugs P, P are pushed into the connection adapter B from the opposite sides thereof, so that the engagement projections 3a, 3a of the sleeves 3, 3 of the connection adapter B engage the engagement grooves 8a, 8a of the plug frames 8, 8 of the connection plugs P, P as shown in Fig. 9.

At this moment, in the connection plugs P, P and the connection adapter B, the projected, external surface of each of the ferrules 2, 2 comes into contact with the inner surfaces of the split alignment sleeves A, A, and the projected, inner surface of each of the plug frames 8, 8 comes into contact with the projected, external surfaces of the split alignment sleeves, 3, 3. At the same time, the end surfaces of the optical fiber inserted into the connection plugs P, P are brought into pressure contact with each other by the resilient force of each of the coil springs 6, 6 which are built in the connection plugs P, P. Thus, the optical fibers of the optical fiber codes 5, 5 come into contact with each other in such a state that the connection loss is minimized.

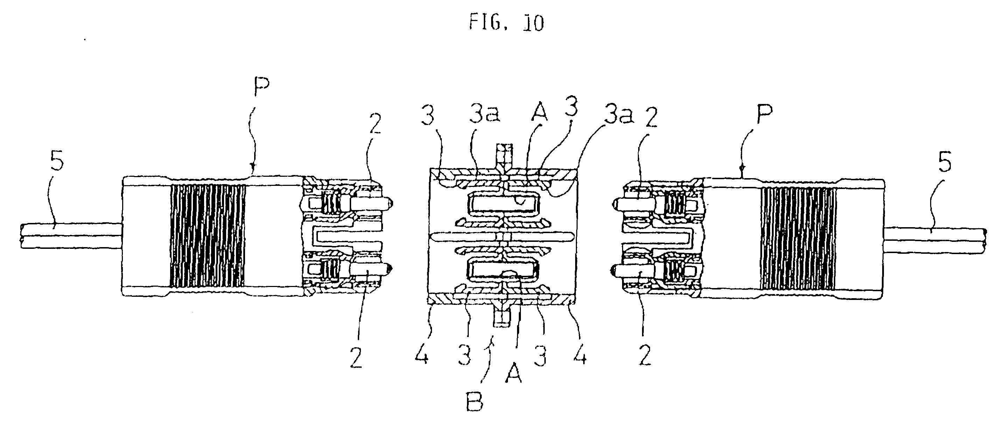

The split alignment sleeve A according to the present invention can also be employed in a two-core connector as shown in Fig. 10. In the figure, a pair of two-core plugs P, P, each provided with two ferrules 2, and a connection adaptor B provided with two split alignment sleeves A are connected at the same time.

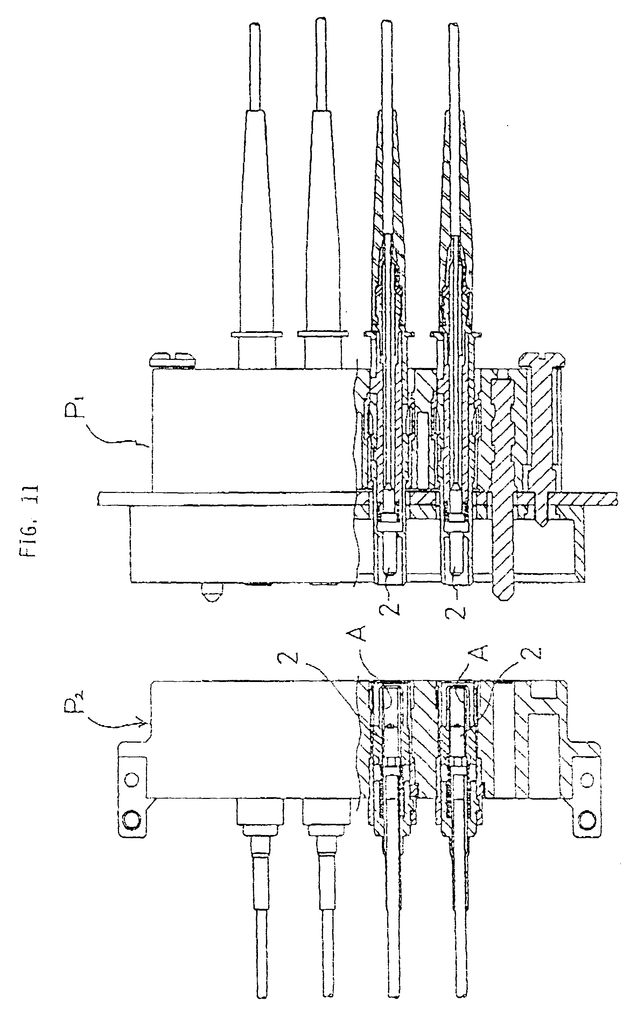

Furthermore, the split alignment sleeve A according to the present invention can be employed in a four-core connector as shown in Fig. 11. In the figure, P₁ indicates a four-core male plug provided with 4 ferrules 2, and P₂ indicates a four-core female plug provided with 4 ferrules 2, which can fit each other.

The reason why the alignment sleeve according to the present invention can be employed in the above-mentioned multi-core connector is that the alignment sleeve of the present invention allows lighter, but securer attachment and detachment of the connection plugs than conventional alignment sleeves.

The ceramic cylindrical alignment sleeve made of zirconia ceramic according to the present invention can be produced by extrusion molding or injection molding, sintering, and grinding the top portion of each inner convex portion. In particular, HIP sintering is effective to improve the quality of the alignment sleeve. Thus the production is easy and the production precision is extremely high. Furthermore, the external surface of the ferrule is tightly held by a plurality of the convex portions in a partial contact state, which is very close to point contact, so that the dispersion of the necessary force for the attachment and detachment of the ferrule is minimized. Therefore, when the alignment sleeve of the present invention is incorporated in a connection adaptor for connecting a pair of connection plugs, the two opposite connections are very stable.

Furthermore, since zirconia ceramic is employed in the alignment sleeve, the hardness of the convex portions is significantly improved. In addition, since each concave portion can hold abrasion powder or dust formed by the friction between the alignment sleeve and the ferrule, there is almost no risk that such abrasion powder or dust comes into the contact portion between the sleeve and the ferrule, so that the abrasion of the sleeve and ferrule which may be caused by the abrasion power or dust can be minimized, and stable holding, attachment and detachment of the ferrule can be achieved over an extended period of time.

## Claims

1. An integrally-molded ceramic cylindrical alignment sleeve comprising:
(a) a cylindrical sleeve body (1), and
(b) a plurality of convex portions (2a,2b,2c) located on and protruding from the inner surface of said sleeve body (1), each of said convex portions (2a,2b,2c) extending from one end to the other in the longitudinal direction of said sleeve body (1), with the radially inner surface of each of said convex portions (2a,2b,2c) having concave shape, and the section where each of said convex portions connects to the inner surface of said sleeve body being continuously rounded, so as to form a smoothly curved shape such that the breaking-strength of the convex portions is increased.

2. The integrally-molded ceramic cylindrical alignment sleeve of claim 1, wherein said sleeve body (1) has a slit in the longitudinal direction thereof.

3. The integrally-molded ceramic cylindrical alignment sleeve of claim 1 or 2, wherein the number of said convex portions is at least three and the radius (R) of said continuously rounded section is about 0.05 mm or more.

4. The integrally-molded ceramic cylindrical alignment sleeve of any one of claims 1 to 3, wherein the ceramic material is zirconia.

5. A method of producing an integrally-molded ceramic cylindrical alignment sleeve as defined in claim 1, which comprises the steps of:
(a) integrally molding a ceramic material into a cylindrical sleeve body (1) provided with a plurality of convex portions (2a,2b,2c) located on (and protruding from) the inner surface of said sleeve body, each of said convex portions (2a,2b,2c) extending from one end to the other in the longitudinal direction of said sleeve body (1) and the section where each of said convex portions connects to the inner surface of said sleeve body being continuously rounded;
(b) sintering said cylindrical sleeve body with said convex portions; and
(c) abrading the upper surfaces of said convex portions so as to give a concave shape to the upper surfaces of said convex portions (2a,2b,2c).

6. The method of claim 5, additionally comprising the step of:
(d) forming a slit in the longitudinal direction of said cylindrical sleeve body.

7. The method of claim 5 or 6, wherein in step (b) the cylindrical sleeve body is subjected to HIP sintering.

8. The method of any one of claims 5 to 7, wherein the ceramic material is zirconia.

9. The method of any one of claims 5 to 8, wherein in step (a) the integral molding is effected by extrusion molding or injection molding.

## Patentansprüche

1. Integral geformte keramische Muffe mit zylindrischer Ausrichtung, umfassend
(a) einen zylindrischen Muffenkörper (1) und
(b) eine Mehrzahl von an der Innenoberfläche des Muffenkörpers (1) befindlichen und daraus hervorstehenden konvexen Bereichen (2a, 2b, 2c), wobei sich jeder der konvexen Bereiche (2a, 2b, 2c) in Längsrichtung des Muffenkörpers (1) von einem Ende zum anderen erstreckt, wobei die radiale Innenoberfläche jedes der konvexen Bereiche (2a, 2b, 2c) eine konkave Form aufweist und der Abschnitt, in dem jeder der konvexen Bereiche mit der Innenoberfläche des Muffenkörpers verbunden ist, kontinuierlich gerundet ist, um eine sanft gewölbte Form zu ergeben, so daß sich die Bruchfestigkeit der konvexen Bereiche erhöht.

2. Integral geformte keramische Muffe mit zylindrischer Ausrichtung nach Anspruch 1, worin der Muffenkörper (1) in Längsrichtung einen Schlitz aufweist.

3. Integral geformte keramische Muffe mit zylindrischer Ausrichtung nach Anspruch 1 oder 2, worin die Anzahl der konvexen Bereiche mindestens 3 beträgt und der Radius (R) des kontinuierlich gerundeten Abschnitts etwa 0,05 mm oder mehr beträgt.

4. Integral geformte keramische Muffe mit zylindrischer Ausrichtung nach irgendeinem der Ansprüche 1 bis 3, worin das keramische Material Zirkoniumdioxid ist.

5. Verfahren zur Herstellung einer wie in Anspruch 1 definierten integral geformten keramischen Muffe mit zylindrischer Ausrichtung, welches die folgenden Schritte umfaßt:
(a) Integrales Formen eines keramischen Materials zu einem zylindrischen Muffenkörper (1), der mit einer Mehrzahl von an der Innenoberfläche des Muffenkörpers befindlichen und daraus hervorstehenden konvexen Bereichen (2a, 2b, 2c) versehen ist, wobei sich jeder der konvexen Bereiche (2a, 2b, 2c) in Längsrichtung des Muffenkörpers (1) von einem Ende zum anderen erstreckt und der Abschnitt, in dem jeder der konvexen Bereiche mit der Innenoberfläche des Muffenkörpers verbunden ist, kontinuierlich gerundet ist;
(b) Sintern des zylindrischen Muffenkörpers mit den konvexen Bereichen; und
(c) Abschleifen der Oberflächen der konvexen Bereiche, um den Oberflächen der konvexen Bereiche (2a, 2b, 2c) eine konkave Form zu verleihen.

6. Verfahren nach Anspruch 5, welches zusätzlich den folgenden Schritt umfaßt:
(d) Ausbilden eines Schlitzes in Längsrichtung des zylindrischen Muffenkörpers.

7. Verfahren nach Anspruch 5 oder 6, worin der zylindrische Muffenkörper in Schritt (b) einer HIP-Sinterung unterzogen wird.

8. Verfahren nach irgendeinem der Ansprüche 5 bis 7, worin das keramische Material Zirkoniumdioxid ist.

9. Verfahren nach irgendeinem der Ansprüche 5 bis 8, worin das integrale Formen in Schritt (a) durch Strangpressen oder Spritzgießen erfolgt.

## Revendications

1. Manchon d'alignement cylindrique céramique moulé solidairement, comprenant :
(a) un corps de manchon cylindrique (1), et
(b) une pluralité de parties convexes (2a, 2b, 2c) situées sur la surface intérieure du dit corps de manchon (1) et en saillie par rapport à cette surface, chacune des dites parties convexes (2a, 2b, 2c) s'étendant d'une extrémité à l'autre dans la direction longitudinale du dit corps de manchon (1), la surface radialement intérieure de chacune des dites parties convexes (2a, 2b, 2c) ayant une forme concave, et la région où chacune des dites parties convexes se raccorde à la surface intérieure du dit corps de manchon étant arrondie de façon continue, afin de définir une forme à courbure régulière de sorte que la résistance à la rupture des parties convexes est augmentée.

2. Manchon d'alignement cylindrique céramique moulé solidairement suivant la revendication 1, dans lequel le dit corps de manchon (1) comporte une fente s'étendant dans sa direction longitudinale.

3. Manchon d'alignement cylindrique céramique moulé solidairement suivant la revendication 1 ou 2, dans lequel le nombre des dites parties convexes est au moins de trois et le rayon (R) de la dite région arrondie de façon continue est environ de 0,05 mm ou plus.

4. Manchon d'alignement cylindrique céramique moulé solidairement suivant une quelconque des revendications 1 à 3, dans lequel la matière céramique est la zircone.

5. Méthode de fabrication d'un manchon d'alignement cylindrique céramique moulé solidairement suivant la revendication 1, qui comprend les étapes de :
(a) moulage unitaire d'une matière céramique pour produire un corps de manchon cylindrique (1) comportant une pluralité de parties convexes (2a, 2b, 2c) situées sur la surface intérieure du dit corps de manchon et en saillie par rapport à cette surface, chacune des dites parties convexes (2a, 2b, 2c) s'étendant d'une extrémité à l'autre dans la direction longitudinale du dit corps de manchon (1), et la région où chacune des dites parties convexes se raccorde à la surface intérieure du dit corps de manchon étant arrondie de façon continue ;
(b) frittage du dit corps de manchon cylindrique comportant les dites parties convexes ; et
(c) abrasion des surfaces supérieures des dites parties convexes de façon à donner une forme concave aux surfaces supérieures des dites parties convexes (2a, 2b, 2c).

6. Méthode suivant la revendication 5, comprenant en outre l'étape de :
(d) formation d'une fente s'étendant dans la direction longitudinale du dit corps de manchon cylindrique.

7. Méthode suivant la revendication 5 ou 6, dans laquelle, à l'étape (b), le corps de manchon cylindrique est soumis à un frittage sous pression isostatique à chaud HIP.

8. Méthode suivant une quelconque des revendications 5 à 7, dans laquelle la matière céramique est la zircone.

9. Méthode suivant une quelconque des revendications 5 à 8, dans laquelle, à l'étape (a), le moulage unitaire est effectué par moulage par extrusion ou moulage par injection.
